# NOUVEAU FASCICULE DE BREVET EUROPEEN

(11) **EP 0 837 812 B2**
(45) Date de publication et mention de la décision concernant l'opposition: **25.03.2009**
(45) Mention de la délivrance du brevet: 17.11.1999
(21) Numéro de dépôt: 96927721.9
(22) Date de dépôt: 01.08.1996
(51) Int. Cl.: B62M 25/02

(54) **DISPOSITIF DE COMPENSATION D'EFFORT POUR UNE COMMANDE A CABLE D'UN DERAILLEUR, NOTAMMENT POUR UN VELO**
KOMPENSATOR FÜR EIN KABEL EINER KETTENSCHALTUNG, INSBESONDERE FÜR FAHRRÄDER
STRESS COMPENSATION DEVICE FOR THE CABLE-TYPE CONTROL OF A DERAILLEUR, PARTICULARLY FOR A BICYCLE

(30) Priorité: 03.08.1995 EP 95450012; 27.09.1995 FR 9511579
(43) Date de publication de la demande: 29.04.1998
(73) Titulaire: SHIMANO INC., Osaka 590-8577 (JP)
(72) Inventeur: Savard, Franck, 86100 Châtellerault (FR)
(74) Mandataire: Wallinger, Michael
(86) Numéro de dépôt international: PCT/FR1996/001222
(87) Numéro de publication internationale: WO 1997/006048

(56) Documents cités:
- EP-A- 0 423 779
- WO-A-95/03208
- WO-A-96/32316
- DE-A- 3 200 562
- DE-A- 3 400 432
- DE-C- 689 783
- US-A- 4 194 408
- US-A- 4 267 742
- US-A- 5 135 441

## Description

La présente invention a pour objet un Dispositif 1 de compensation d'effort dans une commande à câble à deux dérailleurs, notamment pour un vélo.

On connaît des ensembles de changement de vitesses du type comprenant :
- un moyen de commande tel qu'une manette, un levier ou encore une poignée tournante, fixée sur le cadre et à proximité du guidon, manoeuvrable par l'utilisateur,
- un câble de commande, et
- un dérailleur composé d'une platine fixée sur le cadre, d'un élément mobile de guidage de la chaîne, généralement du type parallélogramme, déplaçable latéralement et d'un ressort de rappel de cet élément mobile de guidage dans l'une des positions extrêmes.

Dans le cas d'un dérailleur arrière qui assure le changement de pignons, l'élément mobile est un parallélogramme déformable qui s'écarte du moyeu portant les pignons sous l'effet de rappel du ressort et qui s'en rapproche sous l'action de traction du câble lorsque l'utilisateur exerce un effort sur le moyen de commande.

On peut remarquer que dans le cas des pignons, le saut d'un pignon à l'autre pour la remontée du plus petit vers le plus grand reste d'une amplitude relativement faible car les pignons sont bien étagés, si bien que même difficile, l'effort reste encore raisonnable, bien qu'il faille bander le ressort de rappel pour qu'en retour il puisse libérer l'énergie emmagasinée.

Dans le cas des plateaux, il en est autrement Le plateau le plus petit est du côté du cadre et l'élément de guidage également sous forme de parallélogramme déformable est rappelé vers le cadre et l'organe de manoeuvre est actionné par l'utilisateur pour passer du plus petit au plus grand plateau. La différence de diamètre est là beaucoup plus importante et l'effort à fournir est beaucoup plus grand.

Qui plus est, on constate que lorsque l'utilisateur veut passer du plus grand plateau à un plateau inférieur, il faut tout d'abord faire monter la chaîne au delà du diamètre du grand plateau considéré au sommet des dents et non plus au fond de gorge, ce qui requiert un effort supplémentaire alors que, justement, on cherche à diminuer l'effort à fournir. Ceci conduit à prévoir un ressort de forte capacité élastique pour pouvoir vaincre ce point dur.

Dans le sens de la montée d'un plateau inférieur vers un plateau supérieur, l'utilisateur est obligé de vaincre d'un part ce point dur et d'autre part il lui faut comprimer le ressort, ce qui conduit à des efforts importants à exercer sur la manette, le levier ou la poignée tournante, ceci au détriment de la précision du geste, de l'attention en promenade ou de la concentration en compétition. On s'est même aperçu que cela devient rédhibitoire pour les enfants ou certaines personnes d'une force physique moyenne. Dans tous les cas, il est certain que l'utilisateur a tendance à ajouter un mouvement du corps pour compenser, ce qui le déséquilibre plus ou moins et lorsque l'on sait qu'un tel geste de manoeuvre des dérailleurs s'effectue plusieurs dizaines de fois, voire plusieurs centaines de fois au cours d'une sortie, on comprend l'intérêt qu'il pourrait y avoir à maîtriser l'effort de manoeuvre nécessaire.

On connaît le brevet US-A-5 135 441 qui décrit un agencement pour compenser les efforts à exercer sur le levier de commande d'un changement de vitesses, ce changement de vitesses ayant un ressort de rappel visant à rappeler les moyens de guidage de la chaîne du plus grand pignon ou plateau vers le plus petit.

Un tel agencement fait transiter les efforts de compensation efforts et réactions, à travers une poulie et un axe et non directement sur les pièces à soulager telles que des pièces miniaturisées

C'est le but de l'invention de proposer un dispositif de compensation d'effort dans une commande à câble de deux dérailleurs, notamment pour un vélo, qui favorise les actions pour l'utilisateur en équilibrant les actions tant pour la montée des vitesses que pour la descente, qui est d'un surcoût négligeable, qui est adaptable sur les systèmes existants, qui est quasiment sans conséquence sur le poids, qui est d'un encombrement réduit et qui est parfaitement intégrable tant du point de vue ergonomique qu'esthétique.

A cet effet l'invention prevoi un dispositif de compensation d'effort selon la revendication 1.

Selon une autre caractéristique preferable, le ressort de compensation est un ressort de faible diamètre, avec un grand nombre de spires et avec une raideur relativement faible, qui se présente avec des spires jointives à l'état comprimé, l'effort pour le comprimer ou l'effort restitué étant sensiblement égal à l'effort pour comprimer ou à l'effort restitué par le ressort de rappel du dérailleur.

Le dispositif selon l'invention comprend deux ressorts indépendants, chacun agissant sur le câble correspondant, en sorte d'obtenir une compensation des efforts en toutes circonstances.

L'invention est récrite ci-après selon un mode de réalisation particulier, non limitatif, en regard des dessins annexés sur lesquels les figures représentent :
- figure 1, une vue simplifiée d'un dérailleur de plateaux,
- figure 2, une vue simplifiée d'un dérailleur de pignons,
- figures 3A à 3E, un synoptique des étapes de fonctionnement du dérailleur de plateaux avec le dispositif de compensation selon l'invention, et
- figures 4A à 4E, un synoptique des étapes de fonctionnement du dérailleur de pignons avec le dispositif de compensation selon l'invention.

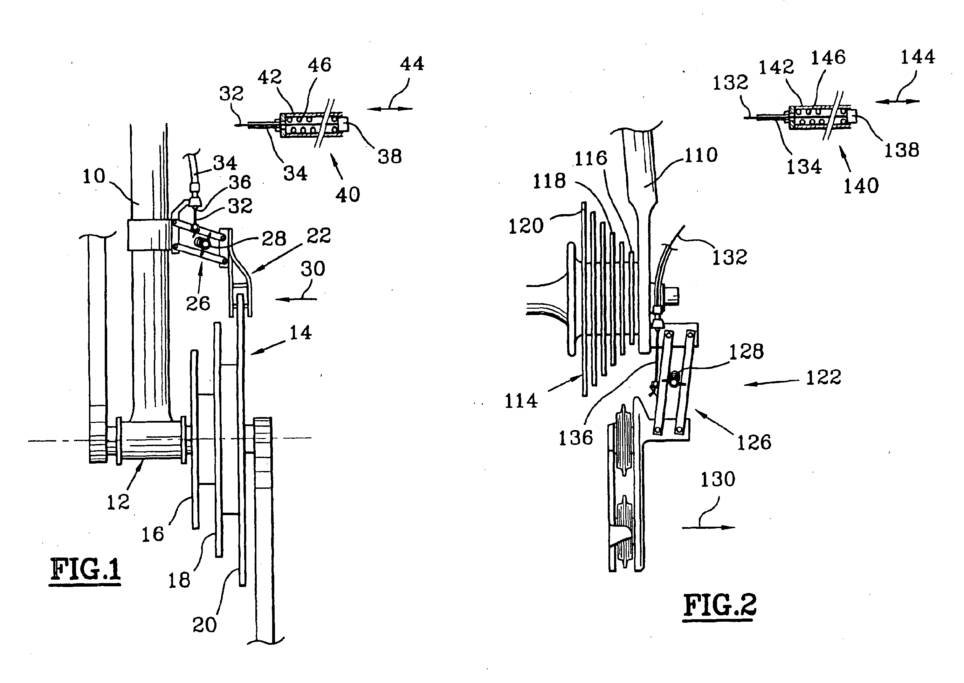

Sur la figure 1, on a représenté une partie du cadre 10 d'un vélo, dans lequel est monté un pédalier 12 qui entraîne des plateaux 14, ceux-ci étant au nombre de trois dans l'exemple représenté.

Ces plateaux comprennent un petit plateau 16, un plateau intermédiaire 18 et un grand plateau 20, disposés en sorte que le petit plateau soit intérieur, c'est à dire proche du cadre et le grand plateau extérieur, c'est à dire éloigné du cadre.

Cette disposition est généralement adoptée car elle est dictée par la combinaison avec les pignons dont l'agencement est inversé comme cela sera expliqué ultérieurement, pour faire en sorte que la chaîne soit bien alignée lors des plus grands efforts, c'est à dire pour le plus petit développement petit plateau/grand pignon, et pour le plus grand développement, grand plateau/petit pignon.

L'ensemble est complété par un dérailleur de plateaux 22, comprenant un bras mobile 24, constitué d'un parallélogramme déformable 26, avec un ressort 28 de rappel dans le sens de la flèche 30, c'est à dire de l'extérieur vers l'intérieur et d'un câble de commande 32 coulissant de façon connue dans une gaine 34, l'une des extrémités 36 de ce câble est reliée au bras mobile.

L'autre extrémité 38 de ce câble est reliée à des moyens de commande représentés de façon très schématique en 40 sous la forme d'une butée 42 de la gaine 34 et sous la forme d'une flèche 44, représentative du déplacement généré dans les deux sens, par une poignée tournante.

Un ressort est plus particulièrement choisi avec un nombre de spires important et une raideur faible pour que l'effort nécessaire à sa compression soit progressif et faible alors que l'effort de rappel résultant est sensiblement équivalent à celui du ressort de rappel 28 du dérailleur avant 22. Ce ressort de rappel est de préférence à spires jointives à l'état complètement comprimé.

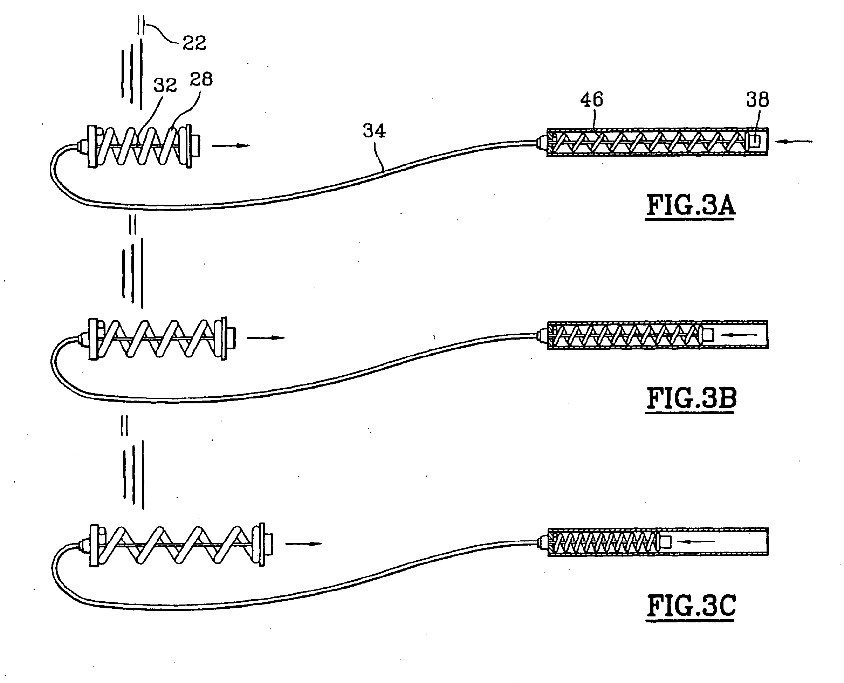

Le fonctionnement de ces moyens de compensation est indiqué ci-après, en regard des figures 3A à 3E. Sur ces figures, le ressort de rappel 28 est représenté comme un ressort de compression, ce qui facilite la compréhension.

Lorsque l'utilisateur pédale avec un développement important et que la chaîne est donc sur le grand plateau 20, figure 3A, le ressort de rappel 28 du bras mobile 26 du dérailleur avant 22 est à l'état comprimé c'est à dire que l'utilisateur a exercé une traction sur le câble 32 et le ressort de compensation 46 est à l'état détendu.

Lorsque l'utilisateur souhaite diminue son développement, voir la figure 3B, il manoeuvre la commande pour descendre d'un plateau et la chaîne se trouve alors sur le plateau intermédiaire 18. Pour réaliser ce déplacement, l'utilisateur actionne le moyen de commande, poignée tournante pour relâcher le câble sur une longueur donnée. Lors de cette action, le ressort de rappel 28 se trouve libéré partellement et restitue une partie de l'énergie emmagasinée tandis qu'il faut comprimer le ressort de compensation 46, ce qui est aisé, grâce aux caractéristiques propres dudit ressort De plus le ressort de rappel 28 participe aussi, pour le surplus d'énergie qu'il libère, à la compression du ressort de compensation 46.

Lorsque l'utilisateur souhaite encore diminuer le développement, il descend la chaîne sur le petit plateau 16 en manoeuvrant à nouveau la poignée pour relâcher encore une longueur de câble donnée.

Le résultat se lit sur la figure 3C, le ressort de rappel 28 du dérailleur est complètement détendu et le ressort 46 du moyen de compensation est comprimé.

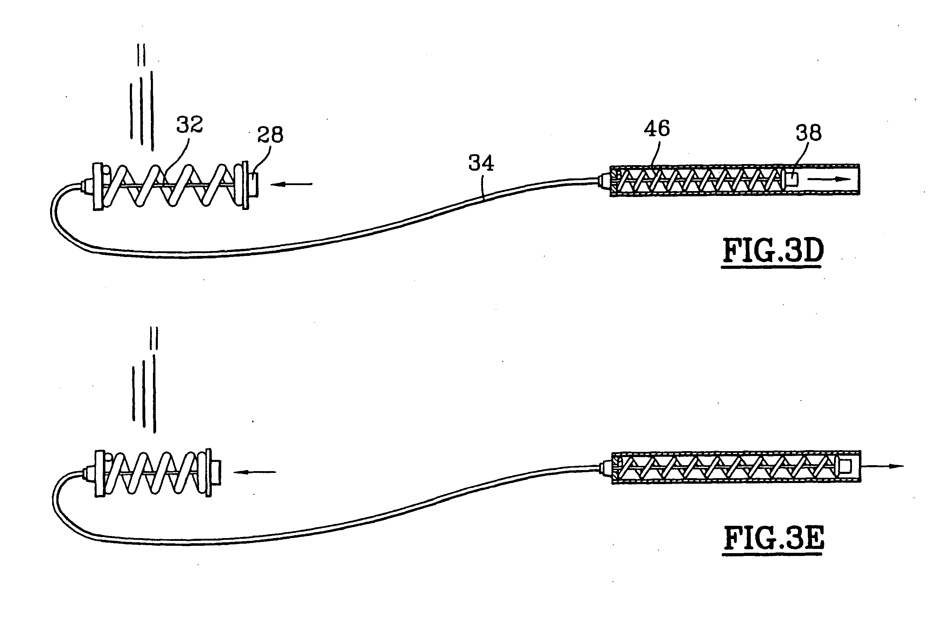

Ainsi lorsque l'utilisateur effectue le cycle inverse, voir figure 3D et 3E, le ressort de rappel 46 assiste l'utilisateur pour comprimer le ressort 28 du dérailleur 22.

On remarque la symétrie d'agencement pour ce qui concerne le dérailleur arrière représenté sur la figure 2.

Les éléments identiques portent les mêmes références augmentées de 100.

Le fonctionnement est identique en ce sens que lorsque la chaîne est sur le plus petit pignon 116, le ressort 128 du bras mobile 126 est détendu et le ressort de compensation 146 est comprimé. Par contre l'effet sur les développements est inversé puisque le passage du grand pignon sur le petit pignon augmente le développement contrairement aux plateaux.

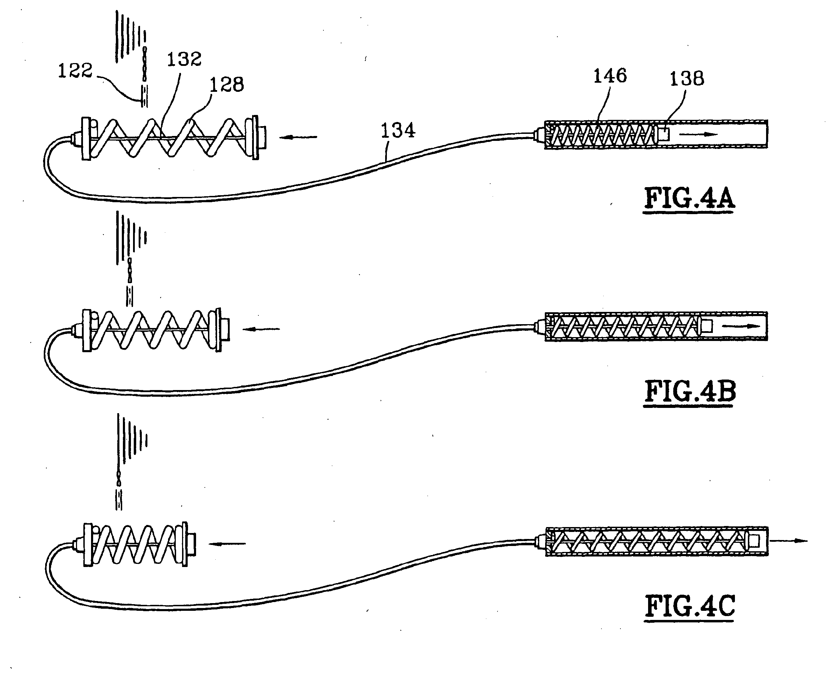

Lorsque l'utilisateur est au développement le plus important, c'est à dire avec le plus petit pignon, pour diminuer ce développement, il lui faut monter quelques pignons et pour cela il exerce une traction sur le câble pour comprimer le ressort de rappel 128 et simultanément l'énergie emmagasinée par le ressort de compensation 146 assiste l'utilisateur par une détente partielle dudit ressort. Ceci est représenté sur la figure 4B par rapport à la figure 4A,

L'utilisateur peut ensuite poursuivre les modifications de développement en exerçant des tractions supplémentaires sur le câble jusqu'à la position représentée sur la figure 3C.

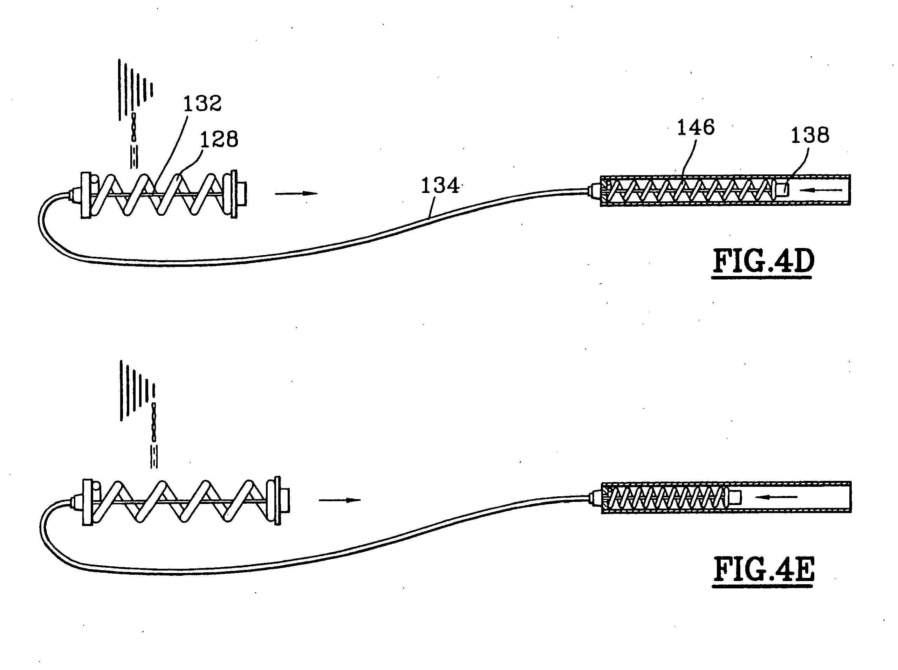

Les figures 4D et 4E représentent les étapes inverses des précédentes.

Ainsi le dispositif d'assistance selon l'invention permet de laisser le ressort de rappel de chacun des dérailleurs agir comme il se doit et facilite par contre les mouvements en répartissant les efforts, c'est à dire qu'il emmagasine de l'énergie et la restitue au moment où elle est nécessaire pour assister l'utilisateur.
Cette répartition trouve un intérêt tout particulier parce que les deux commandes des dérailleurs avant et arrière sont jumelées ou plus exactement commandées par une même poignée avec des moyens pour générer un déplacement différentiel entre les deux câbles des dérailleurs. En effet, dans ce cas, la compensation peut permettre une commande douce de l'ensemble, alors que les efforts à exercer sur l'organe de commande commun pourraient s'avérer importants au point de conduire à une manoeuvre quelque peu dure.

On remarque également que dans le moyen de commande, il faut que le câble soit solidaire de l'organe d'actionnement pour obtenir un effet poussé ou tiré car le ressort de rappel du dérailleur n'assure pas une fraction forte du câble.

## Revendications

1. Dispositif de compensation d'effort dans une commande à cable de deux derailleurs (22,122) **pour une chaîne** notamment fixé sur le cadre (10,110) d'un vélo à plusieurs plateaux (16,18,20) et pignons (116,118,120) respectivement, comprenant deux cables (32,132), chacun comprenant une première extrémité (36,136) solidaire dudit dérailleur respectivement et une seconde extrémité (38,138) solidaire d'un moyen de manoeuvre à poignée tournante monocommande générant un mouvement de translation (44,144), ce câble coulissant dans une gaine (34,134) venant en appui sur une butée (42,142),
le moyen de manoeuvre à poignée tournante étant équipé de moyens pour générer un mouvement différentiel entre les deux câbles (44, 46) des dérailleurs (22,122), et
chaque dérailleur étant équipé d'un ressort de rappel (28,128) étant à l'état comprimé respectivement lorsque la chaîne est sur le plus grand plateau ou pignon respectivement,
ledit dispositif comprenant deux ressorts de compensations independants chacun (46,146) à effet antagoniste étant à l'état détendu lorsque le ressort de rappel du dérailleur correspondant est à l'état comprimé et à l'état comprimé lorsque le ressort de rappel du dérailleur est à l'état détendu,
chaque ressort de compensation (46, 146) étant disposé entre une butée fixe solidaire du vélo et une butée fixe directement solidaire de la seconde extrémité (38,138) du câble (32,132) respective.

2. Dispositif selon la revendication 1, **caractérisé en ce que** chaque ressort de compensation (46,146) est disposé coaxialement au câble (32,132) respective, et est interposé entre une butée fixe (42,142) solidaire du cadre (10,110), et l'extrémité seconde (38,138) de ce câble.

3. Dispositif selon la revendication 2, **caractérisé en ce que** chaque ressort de compensation (46,146) est un ressort de faible diamètre, avec un grand nombre de spires et avec une raideur relativement faible, qui se présente avec des spires jointives à l'état comprimé, l'effort pour le comprimer ou l'effort restitué étant sensiblement égal à l'effort pour comprimer ou l'effort restitué par le ressort de rappel du dérailleur.

## Claims

1. Force compensation device in a cable control for two derailleurs (22, 122) for a chain, notably fixed to the frame (10, 110) of a bicycle with several chainwheels (16, 18, 20) and cogs (116, 118, 120), respectively, including two cables (32, 132) each comprising a first end (36, 136) fixed to its respective derailleur and a second end (38, 138) secured to a means of a monocontrol manoeuvring rotary grip generating a translation movement (44, 144),each cable sliding in a sheath (34, 134) coming into abutment at a stop (42, 142),
wherein the means of the manoeuvring rotary grip is equipped with means for generating a differential movement between the two cables (44, 46) of the derailleurs (22, 122), and
wherein each derailleur is equipped with a spring (28, 128) being in the compressed state respectively when the chain is on the largest chainwheel or cog, respectively,
wherein said device comprises two independent compensation springs (46,146),each acting as opposing-effect elastic restoring elements and being in the extended state when the return spring of the corresponding derailleur is in the compressed state and in the compressed state when the return spring of the derailleur is in the extended state,
wherein each compensation spring (46, 146) is disposed between a fixed stop secured to the bicycle and a fixed stop secured to the second end (38, 138) of the respective cable (32, 132).

2. Device according to Claim 1, **characterised in that** each compensation spring (46, 146) is disposed coaxially with its respective cable (32, 132) and is interposed between a fixed stop (42, 142) secured to the frame (10,110) and the second end (38, 138) of this cable.

3. Device according to Claim 2, **characterised in that** each compensation spring (46, 146) is a small-diameter spring, with a large number of turns and with a relatively low stiffness, which has contiguous turns in the compressed state, the force for compressing it or the restored force being substantially equal to the force for compressing or the force restored by the return spring of the derailleur.

## Patentansprüche

1. Vorrichtung zum Kräfteausgleich in einer Seilsteuerung mit zwei Umwerfern (22, 122) für eine Kette, die insbesondere am Rahmen (10, 110) eines Fahrrads befestigt ist und mehrere Kettenblätter (16, 18, 20) bzw. Kettenräder (116, 118, 120) aufweist und zwei Seilzüge (32, 132) umfasst, beide haben ein erstes Ende (36, 136), welches an diesem entsprechenden Umwerfer befestigt ist und ein zweites Ende (38, 138), welches an einem Mittel zum Betätigen des Drehgriffs befestigt ist, das eine Translationsbewegung (44, 144) erzeugt, der Seilzug gleitet in einer Hülle (34, 134), die sich an einem Anschlag (42, 142) abstützt,
die Mittel zum Betätigen des Drehgriffs sind mit Mitteln zur Erzeugung einer Differenzialbewegung zwischen den beiden Seilzügen (44, 46) der Umwerfer (22, 122) ausgestattet, und
wobei jeder Umwerfer mit einer Feder (28, 128) ausgestattet ist, die jeweils in komprimiertem Zustand ist, wenn sich die Kette auf der größten Scheibe beziehungsweise dem größten Kettenzahnkranz befindet,
wobei die Vorrichtung zwei elastische Ausgleichselemente (46,146) umfasst, jedes davon als elastisch entgegenwirkendes Rückstellelement, das im entlasteten Zustand ist, wenn sich die Rückstellfeder der Kettenschaltung im komprimierten Zustand befindet, und im komprimierten Zustand ist, wenn sich die Rückstellfeder der Kettenschaltung im entlasteten Zustand befindet,
wobei jedes elastische Ausgleichselement (46,146) zwischen einem festen Anschlag, der mit dem Fahrrad fest verbunden ist, und einem festen Anschlag, der mit dem zweiten Ende des entsprechenden Seils verbunden ist.

2. Vorrichtung nach Anspruch 1, **dadurch gekennzeichnet, dass** jedes elastische Ausgleichselement (46,146) koaxial zu seinem entsprechenden Seil (32, 132) und zwischen einem festen Anschlag (42, 142), der am Rahmen (10,110) befestigt ist, und dem zweiten Ende (38, 138) dieses Kabels angeordnet ist.

3. Vorrichtung nach Anspruch 1, **dadurch gekennzeichnet, dass** die Ausgleichsfeder (46, 146) eine Feder mit kleinem Durchmesser mit einer großen Anzahl von Windungen und einer verhältnismäßig geringen Steifigkeit ist, deren Windungen im komprimierten Zustand nebeneinander liegen, wobei die Kompressions- oder Rückstellkraft im Wesentlichen gleich der Kompressions- oder Rückstellkraft der Rückstellfeder der Kettenschaltung ist.
